# EUROPÄISCHE PATENTSCHRIFT

(11) **EP 2 714 974 B1**
(45) Veröffentlichungstag und Bekanntmachung des Hinweises auf die Patenterteilung: **19.06.2019**
(21) Anmeldenummer: 12728958.5
(22) Anmeldetag: 18.05.2012
(51) Int. Cl.: D03D 11/00, B29C 70/22

(54) **MEHRLAGENGEWEBE, SEINE VERWENDUNG SOWIE VERFAHREN ZUR HERSTELLUNG VON COMPOSITEN**
MULTI-LAYER FABRIC, USE THEREOF AND METHOD FOR PRODUCING COMPOSITES
TISSU MULTICOUCHE, SON UTILISATION ET PROCÉDÉ DE FABRICATION DE COMPOSITES

(30) Priorität: 24.05.2011 DE 102011102342
(43) Veröffentlichungstag der Anmeldung: 09.04.2014
(73) Patentinhaber: C. Cramer, Weberei, Heek-Nienborg, GmbH & Co. KG, 48619 Heek (DE)
(72) Erfinder: CRAMER, Johannes, 48619 Heek (DE)
(74) Vertreter: Buse, Mentzel, Ludewig Patentanwaltskanzlei
(86) Internationale Anmeldenummer: PCT/EP2012/002127
(87) Internationale Veröffentlichungsnummer: WO 2012/159723

(56) Entgegenhaltungen:
- EP-A1- 0 408 830
- EP-B1- 0 392 939
- DE-T2- 69 010 059
- US-A- 5 445 693
- US-A- 6 037 035
- US-A1- 2010 215 887

## Beschreibung

Die vorliegende Erfindung betrifft ein Mehrlagengewebe, seine Verwendung als Halbzeug und zur Herstellung von Compositen sowie ein Verfahren zur Herstellung von Compositen unter Verwendung dieses Mehrlagengewebes.

Seit vielen Jahren sind faserverstärkte Kunststoffprodukte oder Faser-Kunststoff-Verbunde oder Composite bekannt, die in den verschiedensten Bereichen Verwendung finden. Üblicherweise wird ein solcher Faserverbundwerkstoff gebildet, indem ein Fasergewebe, ein Fasergelege oder ein anderes textiles Flächengebilde aus Verstärkungsfäden mit einer Kunststoffmatrix verbunden wird. Die mechanischen und thermischen Eigenschaften lassen sich durch die geeignete Kombination von Verstärkungsfäden und Kunststoffmatrix sowie durch deren Faservolumenanteil gezielt einstellen, d.h. konstruieren. Die Verstärkungsfäden bewirken die mechanischen Festigkeitswerte des Verbundes. Die Matrix fixiert diese Verstärkungsfäden und macht auf diese Weise die mechanischen Eigenschaften der Verstärkungsfäden nutzbar. Grundsätzlich unterscheidet man faserverstärkte Kunststoffe mit thermoplastischer Matrix oder mit duroplastischer Harzmatrix. Eine thermoplastische Matrix besteht im Gegensatz zur duroplastischen Matrix nur aus einer Komponente, dem Thermoplast, was die Herstellung eines faserverstärkten Verbundes vereinfacht. Ein solcher Verbund ist darüber hinaus nachträglich umformbar und auch schweißbar. Zur Herstellung wird das textile Flächengebilde, beispielsweise ein Kohlenstoffgewebe, mit der thermoplastischen Matrix beaufschlagt, mehrere beschichtete Gewebelagen in eine Plattenpresse geschichtet und dort unter entsprechenden Temperatur- und Druckbedingungen zu einer Verbundplatte gepresst. Um Lufteinschlüsse zu vermeiden, wird die Vorrichtung gegebenenfalls evakuiert. Die thermoplastische Matrix kann hierbei auch in Form von dünnen Folien bzw. Filmen zwischen einzelne Gewebelagen eingelegt werden (Filmstacking) oder es werden mit der Matrix beschichtete Gewebelagen eingesetzt.

Für die Beschichtung des Gewebes sind verschiedene Verfahren bekannt. So kann die Thermoplastmatrix in definierter Menge als Pulverbeschichtung auf die Gewebeoberseite aufgebracht werden. Durch ein Ansintern verkleben diese Matrixpulverpartikel mit den Verstärkungsfäden des Gewebes. Der Prozess wird für die Unterseite des Gewebes wiederholt und so ein trockenes Vorprodukt (Dry Prepreg) erhalten. Ein trockenes Halbzeug erhält man auch durch das Wirbelsinterverfahren. Hierbei werden Pulverpartikel der thermoplastischen Matrix in einem Wirbelkasten fluidisiert und diese Pulverteilchen lagern sich zwischen die Filamente des in die Wirbelschicht eingebrachten Gewebes ein.

Auch eine Flüssigbeschichtung ist möglich, hierzu wird die thermoplastische Matrix in einem Lösungsmittel aufgelöst bzw. dispergiert und das textile Flächengebilde imprägniert; anschließend muss jedoch das Lösungsmittel wieder entfernt werden, was nachteilig ist.

Es hat sich jedoch gezeigt, dass Vorprodukte, die nach diesen bekannten Beschichtungsverfahren hergestellt wurde, in nachteiliger Weise zu Compositen führen, die einen Anteil an Porosität aufweisen und nicht homogen sind. Die in den Compositen enthaltenen Poren werden durch Luftblasen gebildet, die während der Herstellung des Verbundprodukts nicht entweichen können. Da die Matrix auch die Aufgabe hat, die Verstärkungsfäden in der gewünschten Kraftlinie zu halten, führt Porosität im Verbundprodukt zu einem veränderten Biege-E-Modul. An den Stellen des faserverstärkten Verbundprodukts, wo Luftblasen eingeschlossen sind, d.h. die Verstärkungsfäden nicht vollständig in der Matrix eingebettet sind, können die Verstärkungsfäden bei Belastung leichter ausgelenkt werden, was sich eigenschaftsmindernd auswirkt.

Zum Herstellen eines bekannten Verbundprodukts werden mehrere Lagen imprägnierter textiler Flächengebilde in einer Presse aufeinander geschichtet und die Matrix unter Temperatureinwirkung geschmolzen. Diese aufgeschmolzene Matrix wird aufgrund des angewandten Drucks beim Verpressen durch die aufeinander geschichteten Faserlagen gequetscht, wodurch die Luft zwischen den Faserlagen und innerhalb der Faserlagen seitlich rausgepresst wird, also quer zur Pressrichtung. Durch die Beschichtung der Gewebelagen sind bei jeder Gewebelage unterschiedliche Bedingungen und unterschiedliche Entlüftungswege für die Luft angelegt. Darüber hinaus kann nicht sichergestellt werden, dass sich die Matrix gleichmäßig in der Pressform verteilt, was beim Verpressen in nachteiliger Weise zur Dislokalisation von Fasern aus einer gewünschten Position führt. Da die Verstärkungsfäden je nach Anwendungsfall in gewünschten Kraftlinien ausgerichtet sind, bedeutet das Wegpressen der Verstärkungsfäden oder einzelner Filamente aus diesen Kraftlinien eine Minderung der mechanischen Eigenschaftsmerkmale des entstehenden Bauteils.

Ferner ist es bekannt ein Hybridgarn, also ein Zweikomponentengarn, aus Verstärkungsfäden und thermoplastischen Matrixfäden herzustellen und dieses Hybridgarn zu einer Gewebelage zu verweben. Ein solches Hybridgarn wird beispielsweise durch Vermischen sowie Verwirbeln von Filamenten der beiden unterschiedlichen Materialien und durch ein Ausspinnen unter hohem Druck durch eine Düse gewonnen (Commingle-Verfahren). Da die Filamente in den Hybridfäden nicht ausgerichtet sind, haben faserverstärkten Produkte, die aus Geweben mit diesen Hybridfäden hergestellt werden, ein geringeres Biege-E-Modul im Vergleich zu den nach den vorgenannten Beschichtungsverfahren hergestellten Produkten. Das Dokument DE 42 29 546 A1 beschreibt die Möglichkeit, den Matrixbildner in Form von Fasern oder Garnen bereit zu stellen, insbesondere in Form eines Hybridgarns. In einem Beispiel wird aus einem Hybridgarn ein Gewebe erzeugt, welches zwei Lagen umfasst. Nachteilig ist, dass die vergleichsweise dicken Hybridfäden beim Verweben an den Fadenverkreuzungen stärker aus einer gewünschten Kraftlinie abgelenkt werden als die Verstärkungsfäden bei den bekannten Geweben, was die mechanischen Eigenschaften zusätzlich verschlechtert.

Eine weitere Möglichkeit zur Herstellung eines Verbundproduktes zeigt das Dokument EP 0 392 939 B1. Hier wird eine thermoplastische Gewebestruktur vorgeschlagen, welche durch Einwirkung von Wärme zur Erzielung steifer Gegenstände verformt werden kann. Diese Gewebestruktur besteht aus zumindest zwei aufeinander gelegten Gewebelagen, nämlich einer Lage Verstärkungsgewebe und einer Matrixlage aus thermoplastischen Fäden. Mittels Bindefäden werden je zwei benachbarte Lagen miteinander verwebt. Für die Verbindung zweier Lagen müssen verhältnismäßig viele Abbindepunkte vorgesehen werden, um eine Verschiebbarkeit der Lagen zueinander zu verhindern. An diesen Abbindepunkten werden die Verstärkungsfäden aus ihrer Wirkungslinie heraus gebogen, was bezüglich der gewünschten Eigenschaften des Produktes nachteilig ist.

Darüber hinaus sind trockene Vorprodukte mit mehreren Schichten aus den Dokumenten US 5 445 693 A und US 2010/215887 A1 bekannt, wobei die aufeinander gelegten Schichten durch einen Wirkvorgang vernäht oder vernadelt sind. Die so entstehende Kettenwirkware besitzt Fadenabbindungen, die beim Verpressen der Kettenwirkware Störstellen darstellen können.

Des Weiteren ist aus dem Dokument US 6 037 035 A ein mehrlagiges Abstandsgewebe bekannt, welches durch ein Mehrwebsystem hergestellt wird. In dem trockenen Produkt sind zwischen zwei Lagen mit Verstärkungsfäden thermoplastische Fäden mittels Polfäden gehalten. Diese Polfäden haben die Funktion die beiden Lagen auf Abstand zu halten, d.h. die Lagen sind gegeneinander verschiebbar. Bei einem trockenen Vorprodukt zur Herstellung eines Composits ist jedoch eine solche Verschiebung der Lagen nachteilig.

Aufgabe der vorliegenden Erfindung ist es, ein trockenes Vorprodukt aus einem textilen Flächengebilde und einer thermoplastischen Matrix (Dry Thermoplastic Prepreg) zur Verfügung zu stellen, welches zu Compositen mit verbesserten mechanischen Eigenschaften verpresst werden kann.

Diese Aufgabe wird mit einem trockenen Vorprodukt mit den Merkmalen des Anspruchs 1 erfüllt. Ein besonders vorteilhaftes Mehrlagengewebe lässt sich in vorteilhafter Weise zu einem unporösen Composit verpressen. Bei dem Mehrlagengewebe handelt es sich um ein Gewebe, umfassend mehrere Doppellagen, vorzugsweise zwei bis zehn Doppellagen, wobei die jeweiligen Doppellagen aus zwei unterschiedlichen Schichten bestehen. Das Mehrlagengewebe umfasst damit vorzugsweise vier bis zwanzig Schichten. Eine Schicht einer Doppellage, beispielsweise die obere Schicht, enthält strukturiert angeordnete, gleiche oder unterschiedliche Verstärkungsfäden (Strukturbildner). Die andere Schicht der Doppellage, beispielsweise die untere Schicht, enthält strukturiert angeordnete, gleiche oder unterschiedliche thermoplastische Matrixfäden (Matrixbildner). Die die Schichten und Doppellagen verbindenden Bindefäden bestehen aus dem gleichen Material wie die Matrixfäden und/oder wie die Verstärkungsfäden. Die Bindefäden verbinden dabei mehrere Doppellagen, vorzugsweise alle Doppellagen. Jede Doppellage enthält damit einerseits Verstärkungsfäden und andererseits Matrixfäden.

Die Doppellagen sind vorzugsweise so angeordnet, dass alle oberen Schichten der Doppellagen aus Verstärkungsfäden bestehen und alle unteren Schichten der Doppellagen aus Matrixfäden bestehen. Je nach Anzahl der Doppellagen hat ein solches textiles Mehrlagengewebe eine Gesamtdicke zwischen 0,20 mm und 65 mm.

Die Verstärkungsfäden in der einen Schicht der Doppellage bilden die Armierung für das herzustellende faserverstärkte Halbzeug und sind entsprechend einer gewünschten Kraftwirkung ausgerichtet. Die Verstärkungsfäden werden ohne Fadenumlenkung in der Schicht angeordnet, d.h. als gerade ausgerichtete Kettfäden oder gerade ausgerichtete Schussfäden oder in einer ansonsten gewünschten Richtung, d.h. sie liegen ohne Welligkeit (ohne crimp) in einer Schicht der Doppellage. Für diese Verstärkungsfäden sind Garne, Spinnfasergarne, Kompaktgarne, Endlosfasergarne, Stapelfasergarne, Zwirne, Monofilamente oder Multifilamente einsetzbar. Die Garnstärke liegt dabei in einem Bereich zwischen 66 dtex und 32000 dtex. Diese Verstärkungsfäden können aus anorganischen Fäden bestehen, beispielsweise aus Kohlenstoff, aus Keramik wie beispielsweise Glas, aus Basalt oder anderen Silikaten, aus Siliziumcarbid, aus Metallen wie Stahl, Aluminium oder Titan. Die Verstärkungsfäden können auch aus organischen hochfesten Fäden bestehen, beispielsweise aus Aramid wie Kevlar oder aus Polyvinylen-2,6-benzobisoxazol (PBO), auch bekannt unter dem Handelsnamen Zylon, aus hochverstrecktem Polyethylen wie DYNEEMA oder aus organischen Hochtemperaturthermoplasten.

Die zweite Schicht einer Doppellage besteht aus Matrixfäden, die beim späteren Verpressen des erfindungsgemäßen Mehrlagengewebes aufschmelzen und die Verstärkungsfäden gleichmäßig benetzen und einbetten. Die Matrix schützt auch die Verstärkungsfäden im Verbundprodukt vor Umwelteinflüssen. Für derartige Matrixfäden können Garne, Spinnfaserngarne, Kompaktgarne, Endlosfasergarne, Stapelfasergarne, Zwirne in Form von Multifilamenten aus thermoplastischen Polymeren eingesetzt werden. Dient das Mehrlagengewebe zur Herstellung eines Composites, welches mittels eines Pressvorgangs erhalten werden soll, werden die Multifilamente für die Matrixfäden eingesetzt, da diese Multifilamentfäden beim Verpressen als Entlüftungskanäle fungieren können. Der Schmelzbereich dieser Matrixfäden liegt vorzugsweise zwischen 50°C und 480°C. Die Garnstärke liegt dabei in einem Bereich zwischen 66 dtex und 32000 dtex. Die Matrixfäden aus thermoplastischen Polymeren sind insbesondere Matrixfäden aus Polypropylen (PP), aus Polyethylen (PE) oder auch aus expandiertem Polyethylen (EPE) sowie aus fluoriertem EthylenPropylen (FEP), aber auch aus Polyester wie beispielsweise Polyethylenterephthalat (PET), aus Polyethersulfon (PES), aus Polyphenylensulfid (PPS) z. B. Ryton, aus Polybutylenterephthalat (PBT). Des Weiteren kommen in Betracht Polyamide wie beispielsweise PA 11, PA 12, PA 6.10, PA 6, PA 6.6, PA 4.1, aber auch aus Polybenzimidazol (PBI). Matrixfäden können des Weiteren bestehen aus Polyvinylidenchlorid (PVDC) wie z. B. SARAN, aus Polyvinylidenflüorid (PVDF), aus Perfluoroxylalkan (PFA), aus Polyetherimid (PEI) wie z. B. Ultem, aus Polyetherketon (PEK) wie beispielsweise Polyetheretherketon (PEEK).

Je nach dem gewünschten Anwendungsfall werden für das Mehrlagengewebe gleiche oder unterschiedliche Verstärkungsfäden bzw. gleiche oder unterschiedliche Matrixfäden eingesetzt. Die unterschiedlichen Verstärkungsfäden können innerhalb einer Schicht vorgesehen sein. Bei einem bevorzugten Ausführungsbeispiel werden gleiche erste Verstärkungsfäden in einer Schicht und dazu unterschiedliche Verstärkungsfäden in einer weiteren Schicht einer anderen Doppellage verarbeitet. Dies bedeutet bei einem Mehrlagengewebe mit acht Doppellagen werden beispielsweise die erste, dritte, fünfte und siebente Doppellage mit Verstärkungsfäden einer Art und die zweite, vierte, sechste und achte Doppellage mit Verstärkungsfäden einer weiteren Art eingesetzt, wobei sich die Arten sowohl hinsichtlich der Fadenart also auch hinsichtlich der Materialart unterscheiden können. In gleicher Weise gilt dies für die Matrixfäden. Durch die Verwendung unterschiedlicher Verstärkungsfäden ist ein gezielter Einsatz von Verstärkungs-fäden, insbesondere zur Erreichung eines vorgegebenen Beanspruchungsprofils für das herzustellende Bauteil möglich.

Für die einzelnen Schichten einer Doppellage des Mehrlagengewebes wird zur strukturierten Anordnung der Verstärkungsfäden in einer Schicht und zur strukturierten Anordnung der Matrixfäden in einer weiteren Schicht gezielt eine Gewebestruktur ausgewählt. Je nach dem gewünschten Anwendungsfall werden für das Mehrlagengewebe gleiche oder unterschiedliche Gewebestrukturen für die unterschiedlichen Doppellagen ausgewählt. Der Unterschied kann in einer anderen Struktur, d.h. Anordnung der Fäden, bestehen oder aber bei gleicher Struktur in einer unterschiedlichen Fadendichte. Zur strukturierten Anordnung der Verstärkungsfäden in den jeweiligen Schichten und zur strukturierten Anordnung der Matrixfäden in den weiteren Schichten des Mehrlagengewebes wird bevorzugt die Gewebestruktur "Advanced Synchron Weave" gemäß dem Dokument EP 0 408 830 B1 ausgewählt. Es sind jedoch auch weitere Strukturen neben dem "Advanced Synchron Weave" möglich. Durch eine Gewebstruktur kann genau vorher festgelegt werden, welche Menge Matrix in Form von Matrixfäden einen Verstärkungsfaden später einbetten soll. Dies kann durch die Anzahl und Dicke der Matrixfäden und/ oder durch die Anzahl und Dicke der Verstärkungsfäden beeinflusst werden. Jeder der strukturiert angeordneten Matrixfäden in einer Schicht ist in einer vorbestimmten Lage zu einem Verstärkungsfaden der benachbarten Schicht mit den strukturiert angeordneten Verstärkungsfäden in dem Mehrlagengewebe angeordnet.

Der Faservolumenanteil der Verstärkungsfäden in einem mehrlagigen textilen Mehrlagengewebe kann 15% bis 85% betragen und damit der Faservolumenanteil der Matrixfäden 85% bis 15%. Für ein unporöses, faserverstärktes Produkt beträgt der Faservolumenanteil der thermoplastischen Matrixfäden abhängig von der Dichte des eingesetzten Thermoplasts für die Matrixfäden vorzugsweise 40 bis 60%. Bei Verwendung eines Thermoplasts geringer Dichte, wie Polyethylen (PE), beträgt der Faservolumenanteil der thermoplastischen Matrixfäden beispielsweise 40% und bei Verwendung eines Thermoplasts hoher Dichte beträgt der Faservolumenanteil der thermoplastischen Matrixfäden eher 60%.

Das erfindungsgemäße Mehrlagengewebe kann jedoch auch zur Herstellung von Produkten mit gewünschter Porosität (Porencomposite) verwendet werden, die beispielsweise als Filter oder Förderbänder eingesetzt werden. Hierbei wird ein Faservolumenanteil der thermoplastischen Matrixfäden unter 40% gewählt, ein Mindestfaservolumenanteil der Matrixfäden von 15% sollte zur Erzielung eines homogenen Produkts jedoch eingehalten werden.

Es ist auch möglich den Faservolumenanteil der thermoplastischen Matrixfäden größer als 60% zu wählen. Dies bedeutet, das faserverstärkte Verbundprodukt enthält mehr Matrix als für die porenfreie Einbettung der Verstärkungsfäden notwendig wäre, sie wird zur äußeren Phase des Systems. Dieser hohe Faservolumenanteil an Matrixfäden wird für solche Produkte gewählt, die eine größere Dehnbarkeit aufweisen sollen. Ein Faservolumenanteil an Verstärkungsfäden von mindestens 15% und damit ein Faservolumenanteil an Matrixfäden von höchstens 85% sollte für eine sinnvolle Nutzung des Verbundprodukts jedoch eingehalten werden.

Bekannte Webtechniken (Double-Face-Webtechnologie) ermöglichen die Herstellung eines Mehrlagengewebes mit zehn Doppellagen, d.h. mit zehn Schichten aus Verstärkungsfasern und weiteren zehn Schichten aus Matrixfäden, also insgesamt zwanzig Schichten. Bei einer bevorzugten Ausführungsform wird für die einzelnen Schichten des Mehrlagengewebes zur strukturierten Anordnung der Verstärkungsfäden in den jeweiligen Schichten und zur strukturierten Anordnung der Matrixfäden in den weiteren Schichten gezielt die Gelegegewebestruktur "Advanced Synchron Weave" ausgewählt, so dass insbesondere ein Mehrlagengewebe mit einer geschlossenen und glatten Oberfläche beim Weben erhalten wird. Diese Gelegegewebestruktur "Advanced Synchron Weave" ist in dem Dokument EP 0 408 830 B1 beschrieben. Hierbei sind die Verstärkungsfäden in Kettrichtung und/oder in Schussrichtung, d.h. ohne Einbindung (ohne crimp), vorgesehen. Bei einem entsprechenden Anforderungsprofil können die Verstärkungsfäden sowohl als Kettfäden und/oder als Schussfäden und/oder in einer anderen Ausrichtung - beispielsweise diagonal dazu - vorgesehen werden, so dass sich diese Verstärkungsfäden in gewünschter Kraftlinienausrichtung befinden. Ein auf diese Art gewebtes Mehrlagengewebe besitzt eine Oberseite, auf der die Verstärkungsfäden sichtbar sind und eine Unterseite, auf der die Matrixfäden zu sehen sind. Die mehrere Doppellagen verbindenden Bindefäden bestehen aus Matrixfäden. Dabei werden mindestens zwei Doppellagen mittels der Bindefäden miteinander verbunden. Der Anteil der Bindefäden im Gewebe ist relativ gering, so dass sie in der Regel bei Betrachtung der Oberseite oder der Unterseite des Gewebes nur als punktförmige Einbindungen zu sehen sind. Die Bindefäden werden vorzugsweise durch alle Doppellagen geführt und verbinden somit alle Schichten des Mehrlagengewebes. Hierfür ist eine geringe Anzahl an Bindefäden notwendig. Trotz der geringen Anzahl an Bindefäden sind die Schichten der Doppellagen und die Doppellagen nicht gegeneinander verschiebbar. Ein solches Mehrlagengewebe, beispielsweise ein aus zehn Doppellagen aufgebautes Mehrlagengewebe, stellt ein einstückiges trockenes Vorprodukt (Dry Prepreg) dar, welches in einfachster Weise - ohne einen Beschichtungsvorgang - zu einer ebenen Verbundplatte verpresst werden kann. Bei dem bekannten Pressvorgang wird durch Wärme die Matrix, in diesem Fall die Schichten der Matrixfäden, aufgeschmolzen. Der Pressvorgang kann dann in einer bekannten Doppelbandpresse, einer Intervallpresse, einer Plattenpresse oder einem Autoklaven durchgeführt werden. Die Wärmeenergie zum Aufschmelzen der Matrix kann dabei durch Kontaktwärme, Strahlungswärme wie HF-Strahlung oder IR-Strahlung oder durch Ultraschall zugeführt werden. Nach dem Aufschmelzen der Matrixfäden und dem Verdichten des Mehrlagengewebes zu dem faserverstärkten Verbundprodukt kann ein kontrolliertes Abkühlen vorgenommen werden. Wird ein solches Mehrlagengewebe unter Wärmeeinwirkung zu einem Composit verpresst, werden die strukturiert angeordneten Verstärkungsfäden ohne Änderung ihrer Ausrichtung in der aufgeschmolzenen und wieder erstarrten Matrix eingebettet. Das Composit hat die Gestalt eines aus Verstärkungsfäden gebildeten, in einer Matrix eingebetteten Geleges. Die Verstärkungsfäden des Composits liegen dabei in der gewünschten Kraftlinienausrichtung, ohne durch die ursprüngliche Gewebestruktur oder den Herstellungsvorgang aus ihrer Wirkrichtung herausgebogen worden zu sein.

Aufgrund der strukturierten Anordnung der Matrixfäden in einer gewählten Gewebestruktur, z.B. der Gelegegewebestruktur "Advanced Synchron Weave", ist die Matrix bereits gleichmäßig in dem trockenen Vorprodukt (Dry Prepreg), dem Mehrlagengewebe, verteilt. Es ist genau festgelegt, welche Menge Matrix in Form von Matrixfäden einen Verstärkungsfaden später einbetten soll. Jeder der strukturiert angeordneten Matrixfäden in einer Schicht ist in einer vorbestimmten Lage zu einem Verstärkungsfaden der benachbarten Schicht mit den strukturiert angeordneten Verstärkungsfäden in dem Mehrlagengewebe angeordnet. Durch diese ideale, gleichmäßige Verteilung der Matrixfäden ist sichergestellt, dass jedes Filament der Verstärkungsfäden beim Aufschmelzen mit der Matrix benetzt wird (Mikroimprägnierung), ohne dass beim Verpressen Verstärkungsfäden oder Filamente aus der gewünschten Kraftlinie weggepresst werden. Darüber hinaus werden durch die gewählte Struktur für das Mehrlagengewebe, z.B. durch die Gewebestruktur, gerichtete Wege zur Entlüftung geschaffen. Bei der Verwendung von Multifilamenten, insbesondere für die Matrixfäden, bilden diese zusätzlich quasi Entlüftungskanäle.

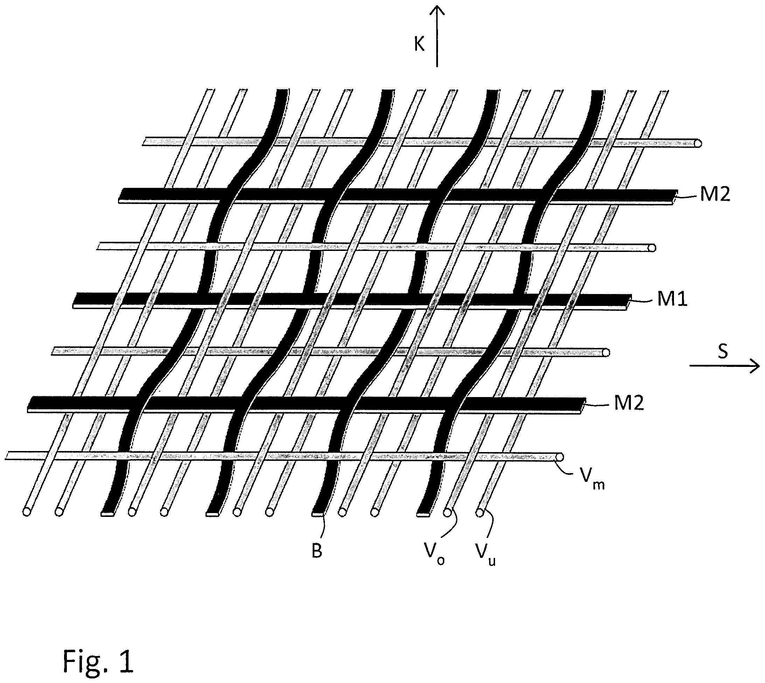

Nachfolgend wird anhand einer Prinzipskizze, siehe Figur 1, eine Ausführungsform eines erfindungsgemäßen Mehrlagengewebes beschrieben. Die Erfindung ist nicht auf dieses Ausführungsbeispiel beschränkt. Es handelt sich um ein Mehrlagengewebe mit einer Gelegegewebestruktur "Advanced Synchron Weave". Die eingezeichneten Fäden sind der Übersicht halber mit gegenseitigem Abstand dargestellt. Hierbei sind die Matrixfäden M1, M2 in Schussrichtung S vorgesehen. Die Matrixfäden M1 bilden dabei die erste Schicht der ersten Doppellage. Darüber sind die Verstärkungsfäden Vo, Vm, Vu der ersten Schicht der ersten Doppellage angeordnet. Diese aus Kohlenstofffasern gebildeten Verstärkungsfäden Vo, Vm, Vu sind in gerader Ausrichtung in der Schicht verlegt, nämlich die oberen Verstärkungsfäden Vo und die unteren Verstärkungsfäden Vu in Kettrichtung K und die mittleren Verstärkungsfäden Vm in Schussrichtung S. Darüber ist bereits die zweite Schicht Matrixfäden M2 der zweiten Doppellage angedeutet. Die zweite Schicht an Verstärkungsfäden und die weiteren Doppellagen sind nicht mehr dargestellt, damit die Prinzipskizze übersichtlich bleibt. Die zweite Schicht an Verstärkungsfäden würde sich oberhalb der Matrixfäden M2 befinden. Darüber dann wieder eine Schicht Matrixfäden und oberhalb dieser dann wieder Verstärkungsfäden. Die Verbindung aller Schichten miteinander erfolgt durch die Bindefäden B, die aus Polyetheretherketon (PEEK) wie die Matrixfäden bestehen. Insgesamt bilden 8 Schichten Matrixfäden und zwar Multifilamentfäden aus Polyetheretherketon (PEEK) und 8 Schichten Verstärkungsfäden, nämlich Monofilfäden aus Kohlenstoff die "Advanced Synchron Weave"-Struktur, eine Gelegegewebe-Struktur, die in einem Webvorgang erzeugt wird.

Die Verstärkungsfäden Vo, Vm, Vu sind dabei jeweils in gerader Ausrichtung in den Schichten verlegt, d.h. ohne Einbindung (ohne crimp), wodurch eine gewünschte Kraftlinienausrichtung der Verstärkungsfäden erreicht wird, ohne dass die Verstärkungsfäden aus dieser vorbestimmten Ausrichtung ausgelenkt werden. Bei der vorliegenden Gelegegewebe-Struktur für das Mehrlagengewebe sind insbesondere die Verstärkungsfäden quasi in Form eines Geleges in die Gewebestruktur eingebracht und alle Schichten werden in einem Webvorgang zu dem Mehrlagengewebe verwebt. Die Anordnung der Verstärkungsfäden ändert sich auch nicht beim Verpressen eines solchen Mehrlagengewebes zu einem Composit. Wird ein solches Mehrlagengewebe in eine Presse eingelegt und zu einer ebenen Compositplatte verdichtet, behalten die Verstärkungsfäden ihre gerade Ausrichtung, nämlich zum einen in Kettrichtung K und zum anderen in Schussrichtung S. Bei einem Pressvorgang schmelzen die thermoplastischen Matrixfäden aus PEEK auf, imprägnieren die Kohlenstofffäden und nach dem Abkühlen liegen die aus Kohlenstoff bestehenden Verstärkungsfäden Vo, Vm, Vu in der gleichen geraden Anordnung wie die Kettfäden Vo, Vu und die Schussfäden Vm des ursprünglichen Gelegegewebes jetzt als Gelege eingebettet in der PEEK-Matrix vor.

Soll dagegen ein unebenes Formteil hergestellt werden, beispielsweise eine gebogene Compositplatte, so wird beim Pressen auch gleichzeitig die gebogene Form gebildet, wozu die Pressenwerkzeuge entsprechend geformt sind. Dazu wird das flexible Mehrlagengewebe beim Einlegen in die Presse so drapiert, dass die Verstärkungsfäden in gewünschter Ausrichtung, nämlich nicht mehr gerade sondern in diesem Fall bogenförmig ausgerichtet sind, um diese Ausrichtung im fertigen Bauteil einzunehmen.

Ein solches Composit besitzt eine äußerst hohe Homogenität und eine kaum nachweisbare Porosität, so dass dieses als unporös bezeichnet werden kann.

Besonders vorteilhaft sind diese erfindungsgemäßen Mehrlagengewebe auch zur Herstellung geformter faserverstärkter Verbundprodukte, wie gewölbter Platten oder dreidimensionaler Bauteile, da sich das textile Mehrlagengewebe gut in einer Form drapieren lässt. Eine ebene Verbundplatte lässt sich aufgrund der thermoplastischen Matrix auch nachträglich umformen. Darüber hinaus lässt sich in einem Mehrlagengewebe durch die Auswahl der Verstärkungsfäden, der Fadenart und der Gewebestruktur gezielt eine gewünschte Festigkeit lokal konstruieren.

Bei weiteren Ausführungen der Erfindung ist vorgesehen, zusätzlich Verstärkungsfäden in einer Zwischenschicht, beispielsweise zwischen die beiden Schichten der Doppellage als sogenannte Polfäden einzuarbeiten. Auf diese Weise kann das Belastungsprofil für das gewünschte faserverstärkte Halbzeug zusätzlich in eine gewünschte Richtung verstärkt werden, wenn die als Polfäden eingesetzten Verstärkungsfäden in die gewünschte Richtung der Kraftlinien ausgerichtet sind.

Es ist damit durch die erfindungsgemäßen Mehrlagengewebe eine gezielte Konstruktion auch von faserverstärkten Hybridbauteilen möglich, nämlich durch die Auswahl unterschiedlicher Verstärkungsfäden bzw. Matrixfäden in einer Doppellage oder in unterschiedlichen Doppellagen, durch das Vorsehen von Polfäden zwischen den Schichten einer Doppellage oder durch eine zusätzliche Einzellage als Zwischenlage zwischen zwei Doppellagen oder als Deckschicht.

Auf diese Weise hergestellte faserverstärkte Composite können beispielsweise als Außenhaut für Flugzeuge, Kraftfahrzeuge oder andere Fahrzeuge eingesetzt werden. Aus diesem Mehrlagengewebe hergestellte dreidimensional geformte Composite sind beispielsweise einsetzbar als Formstücke für Säurepumpen, Prothesen, Sportartikel oder als Strukturbauteile für Fahrzeuge. Der Vorteil dieser Composite ist ihr leichtes Gewicht, ihre Medienbeständigkeit und ihre guten mechanischen Eigenschaften, u.a. kann ein vergleichsweise höheres Biege-E-Modul als bei Compositen aus Hybridgarn erreicht werden.

Die Anwendung des neuen Mehrlagengewebes als Halbzeug zur Herstellung faserverstärkter Verbundkörper hat den Vorteil, dass nach dem Herstellen des Mehrlagengewebes kein Beschichtungsvorgang mehr notwendig ist, da die Matrixfäden bereits beim Weben des Mehrlagengewebe in das textile Produkt integriert werden. Ein solches Mehrlagengewebe kann also ohne Beschichtungsvorgang, ohne Herstellung einer Hybridfaser oder eines Matrixfilms gebildet und unmittelbar in eine entsprechende Pressform eingelegt werden. Unter Aufschmelzung der Matrixfäden wird das Mehrlagengewebe zu dem gewünschten faserverstärkten Verbundkörper verformt und verdichtet werden. Damit wird bei der Herstellung eines faserverstärkten Verbundkörpers ein Arbeitsgang, beispielsweise der Beschichtungsvorgang, eingespart.

Das Mehrlagengewebe ist ein trockenes Vorprodukt, welches gut lagerfähig und hinsichtlich seiner Komponenten lagerstabil ist. In besonders vorteilhafter Weise ist bei dem erfindungsgemäßen Mehrlagengewebe eine gezielte Matrixverteilung aufgrund der gleichmäßig verteilten, strukturiert angeordneten Matrixfäden und eine gezielte Anordnung der Verstärkungsfäden im Verbundkörper aufgrund der insbesondere ohne crimp eingebrachten Verstärkungsfäden möglich. Es wird beim Verpressen des Halbzeugs, nämlich des erfindungsgemäßen textilen Mehrlagengewebes, ein rascher Wärmeübergang und eine vollkommene Entlüftung erzielt; Lufteinschlüsse bleiben vermieden. Die gleichmäßige Verteilung der Matrix in Form der strukturiert zu den Verstärkungsfäden angeordneten Matrixfäden hat eine feinste Mikroimprägnierung der einzelnen Filamente der Verstärkungsfäden durch die geschmolzene Matrix zur Folge. Mit dem spezifischen Schmelzfluss der Matrix beim Verpressen des erfindungsgemäßen Mehrlagengewebes wird ein Auslenken von Verstärkungsfäden aus der idealen Kraftlinie vermieden und somit ein verbessertes Verbundprodukt erhalten.

## Patentansprüche

1. Trockenes Vorprodukt zur Herstellung von Compositen, welches als Mehrlagengewebe sowohl Verstärkungsfäden (Vo, Vu, Vm) als auch thermoplastische Matrixfäden (M1, M2) umfasst,
- wobei das Mehrlagengewebe aus mehreren textilen Doppellagen ist,
- wobei jede Doppellage aus zwei Schichten besteht, nämlich einer Schicht aus strukturiert angeordneten gleichen oder unterschiedlichen Verstärkungsfäden sowie einer Schicht aus strukturiert angeordneten gleichen oder unterschiedlichen Matrixfäden und wobei jeder der strukturiert angeordneten Matrixfäden in einer Schicht in einer vorbestimmten Lage zu einem Verstärkungsfaden der benachbart angeordneten Schicht angeordnet ist,
- wobei die Schichten der Doppellagen durch Bindefäden (B), welche durch mindestens zwei Doppellagen geführt sind, miteinander verbunden sind und
- die Doppellagen und die Schichten der Doppellagen nicht gegen einander verschiebbar sind,
**dadurch gekennzeichnet, dass**
- Multifilamente für die Matrixfäden (M1, M2) eingesetzt werden, da diese Multifilamentfäden beim Verpressen als Entlüftungskanäle dienen können, und dass
- die Verstärkungsfäden (Vo, Vu, Vm) ohne Fadenumlenkung angeordnet sind.

2. Trockenes Vorprodukt nach Anspruch 1, **dadurch gekennzeichnet, dass** bis zu 10 Doppellagen im Mehrlagengewebe vorgesehen sind, wobei die Gesamtdicke des Mehrlagengewebes zwischen 0,20 mm und 65 mm liegt.

3. Trockenes Vorprodukt nach Anspruch 2, **dadurch gekennzeichnet, dass** die gleichen Verstärkungsfäden und die gleiche Anordnung der Verstärkungsfäden für die eine Schicht jeder Doppellage und die gleichen Matrixfäden und die gleiche Anordnung der Matrixfäden für die andere Schicht jeder Doppellage des Mehrlagengewebes verwendet wird.

4. Trockenes Vorprodukt nach Anspruch 2, **dadurch gekennzeichnet, dass** unterschiedliche Verstärkungsfäden und/oder unterschiedliche Anordnungen der Verstärkungsfäden für die eine Schicht der Doppellagen und/oder unterschiedliche Matrixfäden und/oder unterschiedliche Anordnungen der Matrixfäden für die andere Schicht der Doppellagen des Mehrlagengewebes verwendet werden.

5. Trockenes Vorprodukt nach einem der Ansprüche 1 bis 4, **dadurch gekennzeichnet,**
**dass** die Verstärkungsfäden (Vo, Vu, Vm) Garne, Spinnfasergarne, Kompaktgarne,
Endlosfasergarne, Stapelfasergarne, Zwirne, Monofilamente oder Multifilamente mit Garnstärken von 66 dtex bis 32000 dtex sind und aus Kohlenstoff, aus Keramik wie beispielsweise Glas, aus Basalt oder anderen Silikaten, aus Siliziumcarbid, aus Metallen wie Stahl, Aluminium oder Titan, aus Aramid wie beispielsweise Kevlar, aus Polyphenylen-2,6-benzobisoxazol (PBO) wie beispielsweise Zylon, aus hochverstrecktem Polyethylen wie beispielsweise DYNEEMA oder aus anderen organischen Hochtemperatur-thermoplasten bestehen und
**dass** die Matrixmultifilamentfäden (M1, M2) eine Garnstärken von 66 dtex bis 32000
dtex haben und aus thermoplastischen Polymeren mit einem Schmelzpunkt im Bereich zwischen 50°C und 480°C bestehen, vorzugsweise aus Polypropylen (PP), Polyethylen (PE) auch z.B. expandiertes Polyethylen (EPE) oder fluoriertes Ethylenpropylen (FEP), Polyester, Polyethersulfonen (PES), Polyphenylensulfiden (PPS, z.B. Ryton), Polyethylenterephthalaten (PET), Polyamiden (PA), Polyphenylensulfid (PPS), Polyvinylidenchloriden (PVDC, z.B. Saran), Polyvinylidenfluoriden (PVDF), Polyfluoroxyalkanen (PFA), Polybenzimidazol (PBI), Polyetherimiden (PEI z.B. Ultem), Polyetherketon (PEK) wie beispielsweise Polyetheretherketon (PEEK).

6. Trockenes Vorprodukt nach Anspruch 1, **dadurch gekennzeichnet, dass** für die Schichten eine Gewebestruktur gewählt wird, die zu einer geschlossenen und glatten Oberfläche führt, bei der die Verstärkungsfäden in gerader Ausrichtung in der jeweiligen Schicht als Kettfäden und/ oder Schussfäden verlegt sind.

7. Trockenes Vorprodukt einem der Ansprüche 1 bis 6, **dadurch gekennzeichnet, dass** die Bindefäden (B) aus dem gleichen Material wie die Verstärkungsfäden und/ oder wie die Matrixfäden bestehen, vorzugsweise die Bindefäden Multifilamentfäden sind und aus dem gleichen Material wie die Matrixfäden bestehen.

8. Trockenes Vorprodukt nach Anspruch 1, **dadurch gekennzeichnet, dass** die Schicht mit den Verstärkungsfäden einen Faservolumenanteil von 15% bis 85% und die Schicht mit den Matrixfäden ein Faservolumenanteil von 85% bis 15% besitzt.

9. Trockenes Vorprodukt nach einem der Ansprüche 1 bis 8, **dadurch gekennzeichnet, dass** zwischen den zwei Schichten mindestens einer Doppellage Polfäden eingearbeitet sind, wobei die Polfäden aus Matrixfäden oder Verstärkungsfäden bestehen.

10. Trockenes Vorprodukt nach einem der Ansprüche 1 bis 9, **dadurch gekennzeichnet, dass** zwischen den Doppellagen mindestens eine Zwischenlage aus Matrixfäden oder Verstärkungsfäden vorgesehen ist.

11. Verwendung eines trockenen Vorprodukts nach den Ansprüchen 1 bis 10 zur Herstellung von nichtporösen, leichtgewichtigen, ebenen oder gewölbten Compositen, wie beispielsweise Sportartikel, Säurepumpen, Prothesen oder Automobilteile, Kotflügel, Stoßstangen, Kardanwellenabdeckungen, insbesondere mit einem Faservolumenanteil der Verstärkungsfäden von 40% bis 60%.

12. Verwendung des trockenen Vorprodukts nach den Ansprüchen 1 bis 10 zur Herstellung von porösen Produkten zur Anwendung als Filter oder als Förderbänder, wobei insbesondere der Faservolumenanteil der Matrixfäden zwischen 15% und 40% liegt.

## Claims

1. Dry prepreg for the production of composites, which, as a multilayer fabric, comprises both reinforcing threads (Vo, Vu, Vm) as well as thermoplastic matrix threads (M1, M2),
- wherein the multilayer fabric is made of several textile double layers,
- wherein each double layer consists of two layers, namely a layer of structurally arranged identical or different reinforcing threads and a layer of structurally arranged identical or different matrix threads, and wherein each of the structured arranged matrix threads is arranged in a layer in a predetermined position to a reinforcing thread of the adjacently arranged layer,
- wherein the layers of the double layers are connected to each other by binding threads (B), which are guided by at least two double layers, and
- the double layers and the layers of the double layers are not mutually displaceable,
**characterised in that**
- multifilaments for the matrix threads (M1, M2) are used, since these multifilament threads can serve as venting channels during compression, and that
- the reinforcing threads (Vo, Vu, Vm) are arranged without thread deflection.

2. Dry prepreg according to claim 1, **characterised in that** up to 10 double layers are provided in the multilayer fabric, wherein the total thickness of the multilayer fabric is between 0.20 mm and 65 mm.

3. A dry prepreg according to claim 2, **characterised in that** the same reinforcing threads and the same arrangement of the reinforcing threads are used for the one layer of each double layer and the same matrix threads and the same arrangement of the matrix threads for the other layer of each double layer of the multilayer fabric.

4. A dry prepreg according to claim 2, **characterised in that** different reinforcing threads and / or different arrangements of the reinforcing threads for the one layer of the double layers, and / or different matrix threads and / or different arrangements of the matrix threads are used for the other layer of the double layers of the multilayer fabric.

5. Dry prepreg according to one of claims 1 to 4, **characterised in that** the reinforcing threads (Vo, Vu, Vm) are yarns, spun yarns, compact yarns, continuous fibre yarns, staple yarns, twisted yarns, monofilaments or multifilaments with thread sizes from 66 dtex to 32000 dtex and made of carbon of ceramics such as glass, basalt or other silicates, silicon carbide, metals such as steel, aluminium or titanium, aramid such as Kevlar, polyphenylene-2,6-benzobisoxazole (PBO) such as Zylon, highly stretched polyethylene such as, for example, DYNEEMA or other high temperature organic thermoplastics and that the matrix multifilament yarns (M1, M2) have a thread size of 66 dtex to 32000 dtex and consist of thermoplastic polymers with a melting point in the range between 50 °C and 480 °C, preferably polypropylene (PP), polyethylene (PE) also, e.g. expanded polyethylene (EPE) or fluorinated ethylene propylene (FEP), polyesters, polyethersulfones (PES), polyphenylene sulfides (PPS, e.g. Ryton), polyethylene terephthalates (PET), polyamides (PA), polyphenylene sulfide (PPS), polyvinylidene chlorides (PVDC, e.g. saran), polyvinylidene fluoride (PVDF), polyfluorooxyalkanes (PEP) PFA), polybenzimidazole (PBI), polyetherimides (PEI e.g. Ultem), polyetherketone (PEK) such as polyetheretherketone (PEEK).

6. Dry prepreg according to claim 1, **characterised in that** a fabric structure is selected for the layers, which leads to a closed and smooth surface, in which the reinforcing threads are laid in a straight alignment in the respective layer as warp threads and / or weft threads.

7. Dry prepreg according to one of claims 1 to 6, **characterised in that** the binding threads (B) consist of the same material as the reinforcing threads and / or as the matrix threads, and that preferably the binding threads are multifilament threads and consist of the same material as the matrix threads.

8. Dry prepreg according to claim 1, **characterised in that** the layer with the reinforcing threads has a fibre volume fraction of 15% to 85% and the layer with the matrix threads has a fibre volume fraction of 85% to 15%.

9. Dry prepreg according to one of claims 1 to 8, **characterised in that** at least one double layer of pile threads are incorporated between the two layers, wherein the pile threads consist of matrix threads or reinforcing threads.

10. Dry prepreg according to one of claims 1 to 9, **characterised in that** at least one intermediate layer of matrix threads or reinforcing threads is provided in between the double layers.

11. Use of a dry prepreg according to claims 1 to 10 for the production of nonporous, lightweight, planar or curved composites, such as sporting goods, acid pumps, prostheses or automotive parts, fenders, bumpers, propeller shaft covers, in particular with a fibre volume fraction of reinforcing filaments of 40% to 60%.

12. Use of the dry prepreg according to claims 1 to 10 for the production of porous products for use as filters or as conveyor belts, wherein in particular the fibre volume fraction of the matrix fibres is between 15% and 40%.

## Revendications

1. Produit précurseur sec destiné à la fabrication de composites et comprenant, en tant que tissu multicouche, aussi bien des fils renforts (Vo, Vu, Vm) que des fils de matrice (M1, M2) thermoplastiques,
- sachant que le tissu multicouche se compose de plusieurs doubles couches textiles,
- sachant que chaque double couche se compose de deux épaisseurs, à savoir une épaisseur composée de fils renforts identiques ou différents disposés de manière structurée, ainsi que d'une épaisseur de fils de matrice identiques ou différents disposés de manière structurée, et sachant que chacun des fils de matrice disposés de manière structurée est disposé dans une épaisseur sur une position prédéfinie par rapport à un fil renfort de l'épaisseur voisine,
- sachant que les épaisseurs des doubles couches sont reliées entre elles par des fils de liaison (B) qui traversent au minimum deux doubles couches, et que
- les doubles couches et les épaisseurs des doubles couches ne sont pas déplaçables les unes par rapport aux autres,
**caractérisé en ce que**
- des multifilaments sont mis en oeuvre pour les fils de matrice (M1, M2) vu que ces fils multifilamentaires peuvent, lors de la compression, servir de canaux de dégazage, et **en ce que**
- les fils renforts (Vo, Vu, Vm) sont disposés sans renvoi de fil.

2. Produit précurseur sec selon la revendication 1, **caractérisé en ce que** sont prévues jusqu'à 10 doubles couches dans le tissu multicouche, sachant que l'épaisseur totale du tissu multicouche est comprise entre 0,20 mm et 65 mm.

3. Produit précurseur sec selon la revendication 2, **caractérisé en ce que** sont utilisés les mêmes fils renforts et la même disposition des fils renforts pour une épaisseur de chaque double couche, et les mêmes fils de matrice et la même disposition des fils de matrice pour l'autre épaisseur de chaque double douche du tissu multicouche.

4. Produit précurseur sec selon la revendication 2, **caractérisé en ce que** sont utilisés des fils renforts différents et/ou des dispositions différentes des fils renforts pour une épaisseur des doubles couches, et/ou des fils de matrice différents et/ou des dispositions différentes des fils de matrice pour l'autre épaisseur des doubles douches du tissu multicouche.

5. Produit précurseur sec selon l'une des revendications 1 à 4, **caractérisé en ce que** les fils renforts (Vo, Vu, Vm) sont des fils, filés, fils compacts, fils continus, fils à fibres discontinus, fils retors, monofilaments ou multifilaments présentant des épaisseurs de fil comprises entre 66 dtex et 32000 dtex, et qu'ils se composent de carbone, de céramique comme par ex. le verre, de basalte ou d'autres silicates, de carbure de silicium, de métaux tels que l'acier, l'aluminium ou le titane, d'aramide comme par ex. le Kevlar, de polyphénylène-2,6-benzobisoxazole (PBO) tel que par exemple le Zylon, de polyéthylène fortement étiré comme par exemple le DYNEEMA ou d'autres matières organiques thermoplastiques à haute température, et **en ce que** les fils multifilamentaires de matrice (M1, M2) présentent des épaisseurs de fils comprises entre 66 dtex et 32000 dtex et se composent de polymères thermoplastiques dont le point de fusion est compris entre 50 °C et 480 °C, de préférence de polypropylène (PP), de polyéthylène (PE), aussi par ex. de polyéthylène expansé (EPE) ou d'éthylène-propylène fluoré (FEP), de polyester, de polyéthersulfones (PES), de polysulfures de phénylène (PPS, Ryton par ex.), de téréphtalates de polyéthylène (PET), de polyamides (PA), de polysulfure de phénylène (PPS), de chlorures de polyvinylidène (PVDC, Saran par ex.), de flurorures de polyviniylidène (PVDF), d'alcanes polyfluoroxy (PFA), de polybenzimidazole (PBI), de polyétherimides (PEI, Ultem par ex.), de polyéthercétone (PEC) comme par exemple de polyétheréthercétone (PEEC).

6. Produit précurseur sec selon la revendication 1, **caractérisé en ce que** pour les épaisseurs est choisie une structure de tissu conduisant à une surface fermée et lisse, pour laquelle les fils renforts sont posés orientés rectilignes, dans l'épaisseur respective, sous forme de fil de chaîne et/ou de fil de trame.

7. Produit précurseur sec selon l'une des revendications 1 à 6, **caractérisé en ce que** les fils de liaison (B) sont composés du même matériau que les fils renforts et/ou que les fils de matrice, **en ce que** les fils de liaison sont de préférence des fils multifilamentaires et du même matériau que les fils de matrice.

8. Produit précurseur sec selon la revendication 1, **caractérisé en ce que** l'épaisseur dotée des fils renforts possède une part volumique de fibres comprise entre 15 % et 85 %, et **en ce que** l'épaisseur dotée des fils de matrice possède une part volumique de fibres comprise entre 85 % et 15 %.

9. Produit précurseur sec selon l'une des revendications 1 à 8, **caractérisé en ce qu'**entre les deux épaisseurs est incorporée au moins une double couche de fils de poil composés de fils de matrice ou de fils renforts.

10. Produit précurseur selon l'une des revendications 1 à 9, **caractérisé en ce qu'**entre les doubles couches est prévue au moins une couche intermédiaire composée de fils de matrice ou de fils renforts.

11. Utilisation d'un produit précurseur sec selon les revendications 1 à 10 pour fabriquer des composites non poreux, légers, plats ou voûtés tels que par ex. des articles de sport, pompes à acides, prothèses ou pièces automobiles, garde-boue, pare-chocs, couvercles d'arbres à cardan, en particulier avec une part volumique de fibres pour les fils renforts comprise entre 40 % et 60 %.

12. Utilisation du produit précurseur sec selon les revendications 1 à 10 pour fabriquer des produits poreux utilisables comme filtres ou comme tapis convoyeurs, sachant que notamment la part volumique de fibres pour les fils de matrice est comprise entre 15 % et 40 %.
